# EUROPÄISCHE PATENTSCHRIFT

(11) **EP 0 877 884 B1**
(45) Veröffentlichungstag und Bekanntmachung des Hinweises auf die Patenterteilung: **03.11.1999**
(21) Anmeldenummer: 97902252.2
(22) Anmeldetag: 29.01.1997
(51) Int. Cl.: F16K 31/06

(54) **ELEKTROMAGNETVENTIL**
ELECTROMAGNETIC VALVE
ELECTROVANNE

(30) Priorität: 31.01.1996 DE 19603383
(43) Veröffentlichungstag der Anmeldung: 18.11.1998
(73) Patentinhaber: Continental Teves AG & Co. oHG, 60488 Frankfurt (DE)
(72) Erfinder: BECK, Erhard, D-35781 Weilburg (DE)
(74) Vertreter: Blum, Klaus-Dieter, Dipl.-Ing.
(86) Internationale Anmeldenummer: EP9700382
(87) Internationale Veröffentlichungsnummer: WO9728391

(56) Entgegenhaltungen:
- WO-A-93/19961
- DE-A- 4 030 963
- DE-A- 4 221 988

## Beschreibung

Die Erfindung betrifft ein Elektromagnetventil nach dem Oberbegriff des Patentanspruchs 1.

Aus der DE 42 21 988 A1 ist bereits bekannt, einen Haltekörper in Form einer Ventilpatrone mittels einer zweifachen Selbstverstemmung in der Öffnung eines Gehäuses zu befestigen. Die Selbstverstemmung besteht im wesentlichen aus einer Einformung am Außenumfang des Haltekörpers, in die durch die Vorschubbewegung während der Montage des Haltekörpers das Gehäusematerial zur Bildung eines Formschlusses in die Einformung verdrängt wird. Die vorgestellte Befestigungsvorrichtung beschränkt sich ausschließlich auf das Anbringen und Verschließen des Gehäuses durch den ein Elektromagnetventil aufweisenden Haltekörper, so daß für die übrigen, funktionsrelevanten Elemente des Elektromagnetventils separate Befestigungsvorrichtungen und Maßnahmen erforderlich sind, die den konstruktiven als auch fertigungstechnischen Aufwand erhöhen.

Daher ist es die Aufgabe der vorliegenden Erfindung, ein Elektromagnetventil der eingangs genannten Art dahingehend zu verbessern, daß mit möglichst geringem konstruktiven und fertigungstechnischen Aufwand eine einfache, funktionssichere und kleinbauende Ventileinheit für universelle Einsatzzwecke zustande kommt.

Diese Aufgabe wird erfindungsgemäß für ein Elektromagnetventil der gattungsbildenden Art mit den kennzeichnenden Merkmalen des Patentanspruchs 1 gelöst.

Weitere Merkmale, Vorteile und Anwendungsmöglichkeiten der Erfindung gehen im nachfolgenden aus den Unteransprüchen und aus der Beschreibung mehrerer Ausführungsbeispiele anhand von Zeichnungen hervor.

Es zeigen:
- Fig. 1: die bauliche Darstellung einiger Elemente der Erfindung in vergrößertem Maßstab,
- Fig. 2: eine spezielle Ausgestaltung der Erfindung anhand eines Elektromagnetventils,
- Fig.3: eine Variation konstruktiver Einzelheiten des in Fig. 2 vorgestellten Elektromagnetventils.

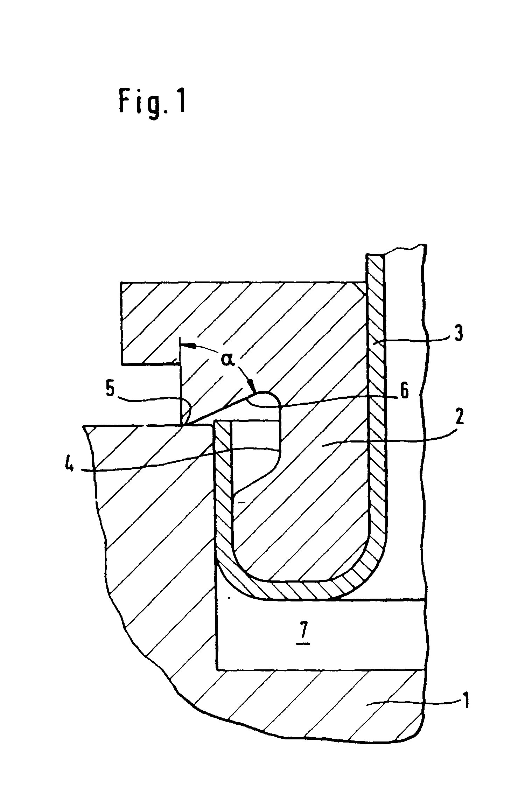

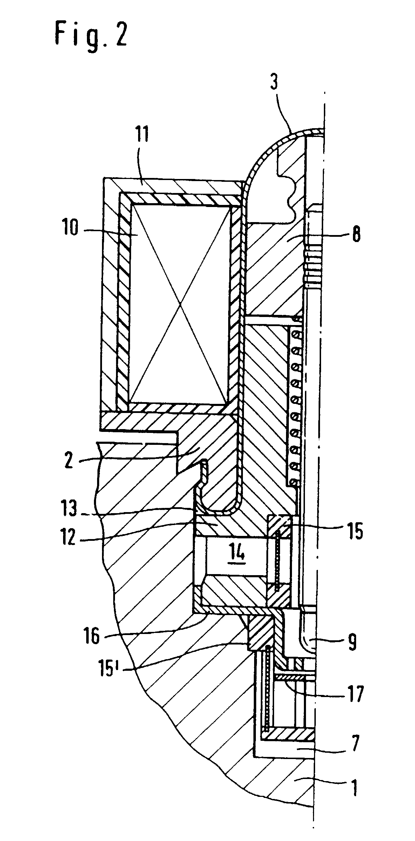

Die Fig. 1 zeigt in erheblich vergrößerter Darstellung Einzelheiten des Erfindungsgegenstandes vor Ausführung des Einpreßvorganges. Zu erkennen sind ein Gehäuse 1 mit einer zylindrischen Öffnung 7, in die sich abschnittsweise ein zylindrischer Haltekörper 2 mit einem daran angebrachten Formteil 3 erstreckt. Zwischen dem Gehäuse 1 und dem Haltekörper 2 befindet sich das Formteil 3 angeordnet, das sich bis auf Höhe einer Einformung 4 am Haltekörper 2 erstreckt. Das Formteil 3 überdeckt hierzu teilweise die Breite der nutförmigen Einformung 4 am Haltekörper 2 zumindest teilweise. Das Formteil 3 ist gleichfalls wie der Haltekörper 2 im vorliegenden Ausführungsbeispiel als Hülse ausgebildet. Der offene Endbereich des Formteils 3 schmiegt sich hierbei weitgehend an der Innen- und Außenkontur des hülsenförmigen Haltekörpers 2 an und umgreift den mit dem kleineren Durchmesser versehenen Stirnflächenbereich des Haltekörpers 2 in Form einer am Haltekörper 2 umlaufenden Rinne. Die am Außenumfang des Haltekörpers 2 zwischen den beiden Kolbenabschnitten des Haltekörpers angeordnete Einformung 4 weist eine Hinterschneidung 6 auf, zwischen der und der Außenkontur des Haltekörpers 2 im abbildungsgemäßen Längsschnitt ein Keilprofil 5 besteht, dessen zwischen der Hinterschneidung 6 und Außenkontur gelegener Keilwinkel α vom Betrage her kleiner als 90° gewählt ist. Dies ist sowohl für die Verdrängerwirkung des in die Einformung 4 plastisch einfließenden Gehäusematerials als auch zur Verformung des vom Gehäusematerial mit in die Einformung 4 zu biegenden Formteils 3 von herstelltechnischem Vorteil. Die hiermit angesprochene Endverformung und gas- sowie flüssigkeitsdichte Verbindung nach dem Selbstverstemmvorgang durch Einwirkung einer äußeren Axialkraft auf den Haltekörper 2 ist in einer speziellen konstruktiven als auch anwendungsgerechten Ausführungsform in Fig. 2 gut zu erkennen. Unter Beachtung der in Fig. 1 gezeigten wesentlichen Elemente der Befestigungsvorrichtung ist zu erwähnen, daß beim Einstemmen des Haltekörpers 2 nicht nur das gegenüber dem Haltekörper 2 weichere Material des Gehäuses 1 in das offene Ende des Formteils 3 in die Einformung 4 mitverdrängt wird, sondern auch durch die radienhafte Profilgestaltung der inneren Stirnfläche am Haltekörper 2 der daran anliegende dünnwandige Abschnitt des Formteils 3 unter Zugbeanspruchung steht. Damit ist eine absolut sichere Abdichtung zwischen dem Formteil 3 und dem Haltekörper 2 als auch zwischen dem Formteil 3 und dem Gehäuse 1 gegeben. Aus Toleranzgründen ist es hierbei zweckmäßig, das Gehäusematerial weiter zu verformen und zu verfestigen, als es für das vollständige Ausfüllen der Einformung 4 erforderlich ist. Für diesen Befestigungsprozeß eignen sich besonders gut handelsübliche Dünnbleche, die sich nicht nur durch eine hohe Zugfestigkeit und Verformbarkeit auszeichnen, sondern überdies leicht und klein zu dimensionieren sind. Damit können je nach Anwendungsfall nahezu beliebige Konturen des Formteils 3 hergestellt werden, die sich für eine Vielzahl funktioneller Aufgaben eignen. Die in Fig. 1 lediglich abschnittsweise gezeigte Befestigungsvorrichtung wäre somit geeignet, weitere Funktionselemente in form- und/oder kraftschlüssige Verbindungen aufzunehmen. Beispielsweise kann das sich aus dem Haltekörper 2 hervorragende hülsenförmige Teil des Formteils 3 als Aufnahme- bzw. Widerlager in eine Halte- bzw. Stützvorrichtung erstrecken.

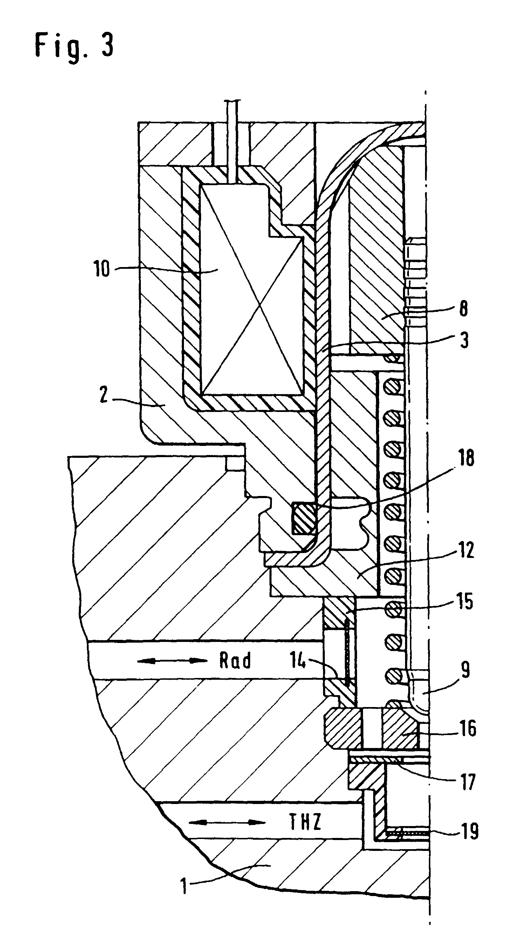

Ein konkretes Ausführungsbeispiel für eine zweckmäßige Anwendung der beschriebenen Befestigungsvorrichtung geht im nachfolgenden aus den Fig. 2 und 3 hervor.

Die Fig. 2 zeigt einen Querschnitt eines Elektromagnetventils in erheblich vergrößertem Maßstab nach vollzogenem Einpreßvorgang des Haltekörpers 2 in das Gehäuse 1. Das Formteil 3 ist gleichfalls wie in Fig. 1 beschrieben, als Hülse ausgebildet, wobei im domartig geschlossenen Bereich der Hülse ein Magnetanker 8 angeordnet ist, der mit einem Ventilschließglied 9 zusammenwirkt. Zur Erregung des Magnetankers 8 ist außerhalb des Formteils 3 auf den Haltekörper 2 eine Ventilspule 10 mit einem Jochring 11 aufgesetzt. Ein im wesentlichen hülsenförmiger Magnetkern 12 erstreckt sich entlang der hülsenförmigen Innenwandung des Formteils 3 bis vor den Magnetanker 8. Der Magnetkern 12 ist in seinem unteren Bereich an die Kontur des um die Stirnfläche des Haltekörpers 2 gelegten offenen Endes des Formteils 3 angepaßt, wobei zwischen der auf die Einformung 4 gerichteten Biegung des Formteils 3 und dem vom Magnetkern 12 begrenzten Gehäuse 1 ein Zwischenraum 13 verbleibt, der bei Bedarf eine zusätzliche Volumenaufnahme für das verformte Gehäusematerial ermöglicht. Um eine möglichst kompakte Bauweise des Elektromagnetventils zu gewährleisten, ist der Magnetkern 12 unterhalb seines hülsenförmigen Abschnitts im Durchmesser erweitert und an die Kontur der abgestuften Öffnung 7 im Gehäuse 1 angepaßt. Der erweiterte Abschnitt am Magnetkern 12 weist einen quer zur Ventilachse verlaufenden Kanalquerschnitt 14 auf, an den sich in einer Längsbohrung des Magnetkerns 12 ein Ringfilterelement 15 anschließt. Zwischen dem erweiterten Stirnflächenbereich des Magnetkerns 12 und einer Stufe in der Öffnung 7 befindet sich ein Ventilsitzkörper 16 eingeklemmt. Zwischen einem weiteren Stufenabschnittsbereich der Öffnung 7 im Gehäuse 1 und dem Ventilsitzkörper 16 ist gleichfalls ein Ringfilterelement 15' gehalten, das gleichzeitig in seinem Innenraum ein Plattenrückschlagventil 17 aufnimmt. Der Ventilsitzkörper 16 ist gleichfalls als Dünnblechteil, vorzugsweise als Stanzbiegeteil hergestellt und gehärtet. Sowohl die durch das Ventilschließglied 9 zu verschließende Durchgangsbohrung als auch die vom Plattenrückschlagventil 17 zu verschließende Bypassbohrung im Ventilsitzkörper 16 sind vorteilhaft durch Stanzen hergestellt. Durch die formschlüssige Verbindung des Ventilsitzkörpers 16 mit dem Magnetkern 12, ermöglichen diese beiden vormontierten Teile am Körper 2 eine unproblematische Einstellung des Magnetankers bzw. des Magnetankerluftspaltes außerhalb des Gehäuses 1.

Durch die vorgestellte Befestigungsmethodik des Ventils im Gehäuse 1 als auch durch die Wahl und Konfiguration der Einzelteile im Elektromagnetventil ist somit die Einhaltung minimaler Toleranzabweichungen gewährleistet. Die formschlüssige Verbindung des Ventilsitzkörpers 16 mit dem Magnetkern 12 wird insbesondere durch eine Schnapp- oder Klemmverbindung begünstigt, womit sich die Vormontage der Ventilteile erleichtert. Bei dem vorgestellten Elektromagnetventil beschränkt sich im Vergleich zu den bisherigen Befestigungsverfahren die Verbindung der Ventilhülse mit dem Magnetkern 12 und dem Haltekörper 2 auf eine einzige Befestigungsstelle in Form einer Selbstverstemmung. Ferner ergibt sich durch die Integration des im Magnetkern 12 innenliegenden Ringfilterelementes 15 als auch durch die Integration des kleinbauenden Plattenrückschlagventils 17 im weiteren Ringfilterelement 15' eine optimale Ausnutzung des im Gehäuse 1 zur Verfügung stehenden Hohlraums.

Die Fig. 3 zeigt abweichend von der Ausführungsform des Elektromagnetventils nach Fig. 2 eine einstückige Verbindung des Jochrings 11 mit dem Haltekörper 2, der im Bereich der Einschnürung 4 eine Innenringnut 18 zur Aufnahme einer am hülsenförmigen Abschnitt des Formteils 3 anliegenden Dichtung hat. Im Gegensatz zu der in Fig. 2 gezeigten Umschlingung des Haltekörpers 2 durch den Endbereich des Formteils 3, ist die Ventilhülse nach Fig. 3 ausschließlich rechtwinklig abgekröpft und zwischen den Flächen von Magnetkern 12 und Haltekörper 2 eingespannt, weshalb die Anordnung vorgenannter Dichtung im Bedarfsfalle zweckmäßig erscheint. Der sich entlang der Abkröpfung an der Ventilhülse erstreckende Abschnitt des Magnetkerns 12 ist im wesentlichen aus einem dünnwandigen Bund gebildet, der sich innerhalb einer Bohrungsstufe im Gehäuse 1 abstützt. Unterhalb des Magnetkerns 12 befindet sich wiederum ein Ringfilterelement 15, das abweichend gegenüber Fig. 2 mit einem zum Ventilschließglied 9 führenden Kanalquerschnitt 14 versehen ist. Der unterhalb des Ventilschließgliedes 9 angeordnete Ventilsitzkörper ist vergleichbar mit Fig. 2 als Ventilplatte relativ dünnwandig ausgeführt. Der Ventilsitzkörper 16 nimmt wie bereits in Fig. 2 gezeigt, koaxial zum Ventilschließglied 9 einen Druckmitteldurchlaß auf, zu dem im Bypass gleichfalls in den Ventilsitzkörper 16 ein Durchlaß gestanzt ist, der zu einem unterhalb des Ventilsitzkörpers 16 angeordneten Plattenrückschlagventil 17 führt. Diesem schließt sich ein weiteres, vorzugsweise Plattenfilterelement 19 an. Soweit nicht auf alle Einzelheiten in Fig. 3 eingegangen wurde, entsprechen diese den aus Fig. 2 bzw. Fig. 1 bekannten Merkmalen.

### Bezugszeichenliste

- 1: Gehäuse
- 2: Haltekörper
- 3: Formteil
- 4: Einformung
- 5: Keilprofil
- 6: Hinterschneidung
- 7: Öffnung
- 8: Magnetanker
- 9: Ventilschließglied
- 10: Ventilspule
- 11: Jochring
- 12: Magnetkern
- 13: Zwischenraum
- 14: Kanal
- 15,15': Ringfilterelement
- 16: Ventilsitzkörper
- 17: Plattenrückschlagventil
- 18: Innenringnut
- 19: Plattenfilterelement

## Patentansprüche

1. Elektromagnetventil, mit einem Haltekörper (2), der mit einer als Formteil (3) ausgebildeten Ventilhülse druckmitteldicht verbunden ist, mit einem in der Ventilhülse axial beweglich angeordneten Magnetanker (8), an dem ein mit einem Ventilsitzkörper (16) korrespondierendes Ventilschließglied (9) angeordnet ist und mit einem im Haltekörper (2) fixierten Magnetkern (12) zur Übertragung des Magnetflusses einer elektrischen Ventilspule (10) vom Magnetanker (8) auf den Haltekörper (2) sowie auf einen an der Ventilhülse und dem Haltekörper (2) anliegenden Jochring (11), wobei der Ventilsitzkörper (16) an der vom Magnetanker (8) abgewandten Stirnseite des Magnetkerns (12) befestigt ist und mit einem koaxial zum Ventilschließglied (9) ausgerichteten Druckmitteldurchlaß versehen ist, dadurch **gekennzeichnet,** daß ein weiterer Durchlaß in Bypassanordnung im Ventilsitzkörper (16) vorgesehen ist, dessen Öffnung von einem Plattenrückschlagventil (17) verschließbar ist.

2. Elektromagnetventil nach Anspruch 1, dadurch **gekennzeichnet,** daß das Plattenrückschlagventil (17) zwischen dem Ventilsitzkörper (16) und einem Filterelement (15', 19) beweglich angeordnet ist.

3. Elektromagnetventil nach Anspruch 1, dadurch **gekennzeichnet,** daß der Ventilsitzkörper (16) aus einem gehärteten Dünnblechteil hergestellt ist.

4. Elektromagnetventil nach Anspruch 2, dadurch **gekennzeichnet,** daß der Ventilsitzkörper (16) aus einem Stanzbiegeteil hergestellt ist.

5. Elektromagnetventil nach Anspruch 1, dadurch **gekennzeichnet,** daß die Druckmitteldurchlässe mittels Stanzen hergestellt sind.

6. Elektromagnetventil nach Anspruch 1, dadurch **gekennzeichnet,** daß der Ventilsitzkörper (16) mit dem Magnetkern (12) am Haltekörper (2) befestigt ist.

7. Elektromagnetventil nach Anspruch 6, dadurch **gekennzeichnet,** daß Ventilsitzkörper, Magnetken und Haltekörper (2,12,16) form- und/oder kraftschlüssig miteinander befestigt sind.

8. Elektromagnetventil nach Anspruch 1, dadurch **gekennzeichnet,** daß der Ventilsitzkörper (16) als topfförmig ausgeformte Ventilplatte gestaltet ist.

## Claims

1. Electromagnetic valve, which includes a retaining member (2) that is pressure-tightly connected to a valve sleeve configured as a shaped part (3), a magnetic armature (8) which is axially movable in the valve sleeve, a valve closure member (9) corresponding with a valve seat member (16) being mounted on the magnetic armature, and a magnetic core (12) fixed in the retaining member (2) to transmit the magnetic flux of an electric valve coil (10) from the magnetic armature (8) to the retaining member (2) and to a yoke ring (11) which abuts on the valve sleeve and the retaining member (2), wherein the valve seat member (16) is attached to the end surface of the magnetic core (12) which is remote from the magnetic armature (8) and includes a pressure fluid passage which is aligned coaxially to the valve closure member (9),
**characterized** in that a second passage is provided in a bypass arrangement in the valve seat member (16), its opening being adapted to be closed by a plate-type non-return valve (17).

2. Electromagnetic valve as claimed in claim 1,
**characterized** in that the plate-type non-return valve (17) is arranged so as to be movable between the valve seat member (16) and a filter element (15', 19).

3. Electromagnetic valve as claimed in claim 1,
**characterized** in that the valve seat member (16) is made from a hardened thin sheet-metal part.

4. Electromagnetic valve as claimed in claim 2,
**characterized** in that the valve seat member (16) is made of a punched part.

5. Electromagnetic valve as claimed in claim 1,
**characterized** in that the pressure fluid passages are made by punching.

6. Electromagnetic valve as claimed in claim 1,
**characterized** in that the valve seat member (16) is attached with the magnetic core (12) on the retaining member (2).

7. Electromagnetic valve as claimed in claim 6,
**characterized** in that the valve seat member, the magnetic core and the retaining member (2, 12, 16) are positively and/or operatively connected to each other.

8. Electromagnetic valve as claimed in claim 1,
**characterized** in that the valve seat member (16) is configured as a bowl-shaped valve plate.

## Revendications

1. Valve à électro-aimant, comprenant un corps de maintien (2), qui est solidaire, d'une manière étanche aux agents de pression, d'un manchon de valve réalisé sous forme d'une pièce de forme (3), une armature mobile d'électro-aimant (8), qui est mobile axialement dans le manchon de valve et sur laquelle est disposé un obturateur de valve (9) correspondant à un corps de siège de valve (16), et un noyau d'électro-aimant (12) fixé dans le corps de maintien (2) et servant à transmettre le flux magnétique d'une bobine électrique de valve (10), de l'armature mobile d'électro-aimant (8) au corps de maintien (2) et à un anneau de culasse (11) qui prend appui sur le manchon de valve et le corps de maintien (2), tandis que le corps de siège de valve (16) est fixé sur la face frontale du noyau d'électro-aimant (12) située à l'opposé de l'armature mobile d'électro-aimant (8) et est pourvu d'un passage d'agent de pression orienté coaxialement par rapport à l'obturateur de valve (9), caractérisée en ce qu'il est prévu, ménagé en dérivation dans le corps de siège de valve (16), un autre passage dont l'ouverture peut être fermée par une valve antiretour (17) à plaquette.

2. Valve à électro-aimant suivant la revendication 1, caractérisée en ce que la valve antiretour (17) à plaquette est mobile entre le corps de siège de valve (16) et un élément de filtre (15', 19).

3. Valve à électro-aimant suivant la revendication 1, caractérisée en ce que le corps de siège de valve (16) est formé d'une pièce en tôle mince trempée.

4. Valve à électro-aimant suivant la revendication 2, caractérisée en ce que le corps de siège de valve (16) est formé d'une pièce pliée et découpée.

5. Valve à électro-aimant suivant la revendication 1, caractérisée en ce que les passages d'agent de pression sont réalisés par découpage.

6. Valve à électro-aimant suivant la revendication 1, caractérisée en ce que le corps de siège de valve (16) est fixé, avec le noyau d'électro-aimant (12), sur le corps de maintien (2).

7. Valve à électro-aimant suivant la revendication 6, caractérisée en ce que le corps de siège de valve, le noyau d'électro-aimant et le corps de maintien (2, 12, 16) sont fixés entre eux par solidarisation par complémentarité de formes et/ou par application de force.

8. Valve à électro-aimant suivant la revendication 1, caractérisée en ce que le corps de siège de valve (16) est réalisé sous forme de plaquette de valve en forme de cuvette.
